# EUROPEAN PATENT SPECIFICATION

(11) **EP 2 339 268 B1**
(45) Date of publication and mention of the grant of the patent: **08.08.2018**
(21) Application number: 10189829.4
(22) Date of filing: 03.11.2010
(51) Int. Cl.: F25B 13/00

(54) **Heat pump apparatus**
Wärmepumpenvorrichtung
Appareil à pompe à chaleur

(30) Priority: 22.12.2009 KR 20090129105
(43) Date of publication of application: 29.06.2011
(73) Proprietor: Samsung Electronics Co., Ltd., Suwon-si, Gyeonggi-do, 443-742 (KR)
(72) Inventor: Kim, Rock Hee, Gyeonggi-do (KR); Jang, Kyung Seog, Gyeonggi-Do (KR); Seo, Hyeong Joon, Gyeonggi-do (KR); Oh, Jae Hyuk, Gyeonggi-do (KR); Kim, Sung Tae, Chungcheongnam-do (KR); Lee, Wook Jin, Seoul (KR); Lim, Chang Soo, Gyeonggi-do (KR)
(74) Representative: Grünecker Patent- und Rechtsanwälte PartG mbB

(56) References cited:
- EP-A1- 1 498 668
- EP-A2- 1 635 129
- EP-A2- 2 426 438
- JP-A- H0 914 790
- US-A- 5 159 817
- US-A1- 2006 266 063

## Description

### BACKGROUND

### 1. Field

Embodiments of the present invention relate to a heat pump apparatus which includes a first heat exchanger unit and a second heat exchanger unit so as to supply hot water to simultaneously perform a heating operation and a hot water supply operation using two four-way valves, and an outdoor unit thereof.

### 2. Description of the Related Art

In general, a heat pump apparatus includes a compressor, a four-way valve to execute change between cooling and heating operations, an expansion device, an outdoor heat exchanger, and a heat exchanger unit including an indoor heat exchanger and a heat exchanger for hot water supply.

In order to heat water in a storage tank in such a heat pump apparatus, the heat exchanger for hot water supply installed in parallel with the indoor heat exchanger is inserted into the storage tank and thus heats the water in the storage tank. Therefore, the indoor heat exchanger and the heat exchanger for hot water supply are not operated simultaneously.

Further, a waste heat recovery operation in which waste heat generated during the cooling operation of the indoor heat exchanger is recovered and then is used to heat the water in the storage tank is not performed.

From EP 1 635 129 A2, a heat pump system having a compressor, two outdoor heat exchangers, a receiver, multiple heat exchanger units and an accumulator is known. The heat pump system further comprises two four-way valves, which in combination with additional valves allow switching the operation modes of at least some of the indoor heat exchanger units between a heating mode and a cooling mode.

### SUMMARY

Therefore, it is an aspect of the present invention to provide a heat pump apparatus which includes a first heat exchanger unit and a second heat exchanger unit so as to supply hot water to simultaneously perform a heating operation and a hot water supply operation using two four-way valves. It is an object of the present invention to provide a heat pump apparatus which uses waste heat, recovered from a first heat exchanger unit to perform a cooling operation, to perform a heating operation of a second heat exchanger unit. This object is achieved by the subject matter of claim 1. The dependent claims describe advantageous embodiments of the intention.

Additional aspects of the invention will be set forth in part in the description which follows and, in part, will be obvious from the description, or may be learned by practice of the invention.

In accordance with the present invention, a heat pump apparatus includes a compressor, four-way valves, an outdoor heat exchanger, a first expansion device, a receiver, a second expansion device, a third expansion device, heat exchanger units, and an accumulator, which are sequentially connected in series by refrigerant pipes, wherein the outdoor heat exchanger includes a first part and a second part divided from each other, the four-way valves include a first four-way valve connected to the first part of the outdoor heat exchanger, and a second four-way valve arranged in parallel with the first four-way valve and connected to the second part of the outdoor heat exchanger, and the heat exchanger units include a first heat exchanger unit connected to the first four-way valve, and a second heat exchanger unit connected to the second four-way valve.

The first four-way valve includes a first port connected to an outlet side of the compressor, a second port connected to the first part of the outdoor heat exchanger, a third port connected to the accumulator, and a fourth port connected to the first heat exchanger unit, and the second four-way valve includes a first port connected to the outlet side of the compressor, a second port connected to the second part of the outdoor heat exchanger, a third port connected to the accumulator, and a fourth port connected to the second heat exchanger unit.

The heat pump apparatus further includes a control device to control the first and second four-way valves. When the first port and the second port of the first four-way valve are connected and the third port and the fourth port of the first four-way valve are connected and the first port and the fourth port of the second four-way valve are connected by the control device, the refrigerant sequentially flows to the compressor, the first and second four-way valves, the first part of the outdoor heat exchanger and the second heat exchanger unit, the first and third expansion devices, the receiver, the second expansion device, the first heat exchanger unit, the first four-way valve, the accumulator, and the compressor.

When the first port and the second port of each of the first and second four-way valves are connected and the third port and the fourth port of each of the first and second four-way valves are connected by the control device, the refrigerant may sequentially flow to the compressor, the first and second four-way valves, the outdoor heat exchanger, the first expansion device, the receiver, the second and third expansion devices, the first and second heat exchanger units, the first and second four-way valves, the accumulator, and the compressor.

When the first port and the fourth port of each of the first and second four-way valves are connected and the second port and the third port of each of the first and second four-way valves are connected by the control device, the refrigerant may sequentially flow to the compressor, the first and second four-way valves, the first and second heat exchanger units, the second and third expansion devices, the receiver, the first expansion device, the outdoor heat exchanger, the first and second four-way valves, the accumulator, and the compressor.

The first heat exchanger unit may include a first sub-heat exchanger unit and a second sub-heat exchanger unit arranged in parallel and connected to the second expansion device and the fourth port of the first four-way valve.

The first expansion device may include a first sub-expansion device provided between the first part of the outdoor heat exchanger and the receiver, and a second sub-expansion device provided between the second part of the outdoor heat
exchanger and the receiver.

The second expansion device may include a third sub-expansion device provided between the first sub-heat exchanger unit and the receiver, and a fourth sub-expansion device provided between the second sub-heat exchanger unit and the receiver, and the third expansion device may be provided between the second heat exchanger unit and the receiver.

The first heat exchanger unit may include at least one of an indoor air heat exchanger which exchanges heat between a refrigerant and indoor air to cool and heat an indoor space, and a water-refrigerant heat exchanger which exchanges heat between the refrigerant and water to cool and heat the indoor space.

The second heat exchanger unit may include at least one of a water-refrigerant heat exchanger which exchanges heat between a refrigerant and water to cool and heat an indoor space, and a heat exchanger for hot water supply to heat water in a storage tank.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a circuit diagram illustrating a flow of a refrigerant used in a heat pump apparatus in accordance with one embodiment of the present invention;
FIG. 2 is a view illustrating a control device controlling the flow of the refrigerant of FIG. 1;
FIG. 3 is a circuit diagram illustrating a flow of the refrigerant when first and second heat exchanger units of the heat pump apparatus perform cooling operations;
FIG. 4 is a circuit diagram illustrating a flow of the refrigerant when the first and second heat exchanger units of the heat pump apparatus perform heating operations; and
FIG. 5 is a circuit diagram illustrating a flow of the refrigerant when the first and second heat exchanger units of the heat pump apparatus perform cooling and heating operations.

### DETAILED DESCRIPTION

Reference will now be made in detail to the embodiments of the present invention, examples of which are illustrated in the accompanying drawings, wherein like reference numerals refer to like elements throughout.

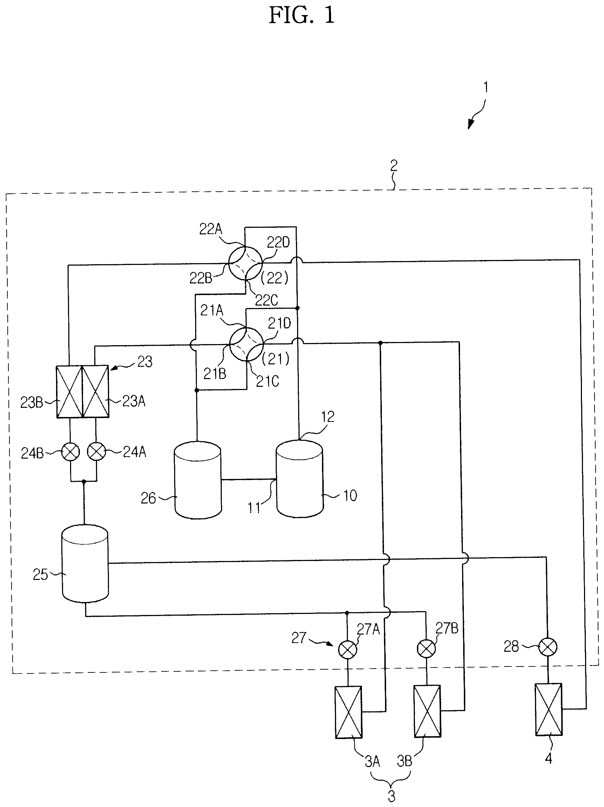

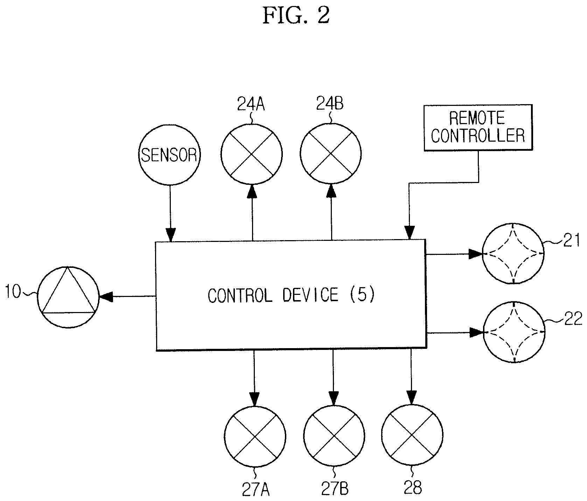

FIG. 1 is a circuit diagram illustrating a flow of a refrigerant used in a heat pump apparatus in accordance with one embodiment of the present invention, and FIG. 2 is a view illustrating a control device controlling the flow of the refrigerant of FIG. 1.

As shown in FIGS. 1 and 2, a heat pump apparatus 1 in accordance with this embodiment includes an outdoor unit 2, and heat exchanger units 3 and 4 installed at the outside of the outdoor unit 2.

The outdoor unit 2 of the heat pump apparatus 1 in accordance with this embodiment includes a compressor 10, four-way valves 21 and 22, an outdoor heat exchanger 23, a first expansion device 24, a receiver 25, an accumulator 26, a second expansion device 27, and a third expansion device 28.

The compressor 10 compresses a refrigerant in a low-temperature and low-pressure gaseous state inhaled through an inlet side 11 into a high-temperature and high-pressure gaseous state through an outlet side 12.

The compressor 10 may include an inverter compressor having a compression capacity which is variable according to input frequencies, or a combination of a plurality of constant speed compressors, each of which has a constant compression capacity.

The inlet side 11 of the compressor 10 is connected to an accumulator 26, and the outlet side 12 of the compressor 10 is connected to the four-way valves 21 and 22.

The outdoor heat exchanger 23 may include an air heat exchanger performing heat exchange with surrounding air as a condenser when the heat exchanger units 3 and 4, which will be described later, perform cooling operations and as an evaporator when the heat exchanger units 3 and 4 perform heating operations.

An outdoor fan (not shown) to perform heat exchange between the refrigerant and outdoor air may be installed in the outdoor heat exchanger 23.

The outdoor heat exchanger 23 is divided into a first part 23A and a second part 23B such that they may be independently operated.

The first part 23A of the outdoor heat exchanger 23 is connected to the compressor 10 via a first four-way valve 21, and the second part 23B of the outdoor heat exchanger 23 is connected to the compressor 10 via a second four-way valve 22.

The four-way valves 21 and 22 enable the refrigerant discharged from the compressor 10 to the outdoor heat exchanger 23 or the heat exchanger units 3 and 4, thus changing the flow of the refrigerant according to user selection.

The four-way valves 21 and 22 include the first four-way valve 21 and the second four-way valve 22 connected to each other in parallel so as to enable the refrigerant discharged from the compressor 10 to divisionally flow.

A first port 21A of the first four-way valve 21 is connected to the outlet side 12 of the compressor 10, a second port 21B of the first four-way valve 21 is connected to the first part 23A of the outdoor heat exchanger 23, a third port 21C of the first four-way valve 21 is connected to the accumulator 26, and a fourth port 21D of the first four-way valve 21 is connected to a first heat exchanger unit 3.

The first four-way valve 21 changes the flow of the refrigerant between a state in which the first port 21A and the second port 21B are connected and the third port 21C and the fourth port 21D are connected and a state in which the first port 21A and the fourth port 21D are connected and the second port 21B and the third port 21C are connected.

That is, when the first port 21A and the second port 21B of the first four-way valve 21 are connected and the third port 21C and the fourth port 21D of the first four-way valve 21 are connected, the refrigerant discharged from the first four-way valve 21 flows toward the first part 23A of the outdoor heat exchanger 23, and the refrigerant introduced into the first four-way valve 21 flows toward the accumulator 26. Further, when the first port 21A and the fourth port 21D of the first four-way valve 21 are connected and the second port 21B and the third port 21C of the first four-way valve 21 are connected, the refrigerant discharged from the first four-way valve 21 flows toward the first heat exchanger unit 3, and the refrigerant introduced into the first four-way valve 21 flows toward the accumulator 26.

A first port 22A of the second four-way valve 22 is connected to the outlet side 12 of the compressor 10, a second port 22B of the second four-way valve 22 is connected to the second part 23B of the outdoor heat exchanger 23, a third port 22C of the second four-way valve 22 is connected to the accumulator 26, and a fourth port 22D of the second four-way valve 22 is connected to a second heat exchanger unit 4.

The second four-way valve 22 changes the flow of the refrigerant between a state in which the first port 22A and the second port 22B are connected and the third port 22C and the fourth port 22D are connected and a state in which the first port 22A and the fourth port 22D are connected and the second port 22B and the third port 22C are connected.

That is, when the first port 22A and the second port 22B of the second four-way valve 22 are connected and the third port 22C and the fourth port 22D of the second four-way valve 22 are connected, the refrigerant discharged from the second four-way valve 22 flows toward the second part 23B of the outdoor heat exchanger 23, and the refrigerant introduced into the second four-way valve 22 flows toward the accumulator 26. Further, when the first port 22A and the fourth port 22D of the second four-way valve 22 are connected and the second port 22B and the third port 22C of the second four-way valve 22 are connected, the refrigerant discharged from the second four-way valve 22 flows toward the second heat exchanger unit 4, and the refrigerant introduced into the second four-way valve 22 flows to the accumulator 26.

The first expansion device 24 is a kind of variable expansion device, which expands or intercepts the refrigerant passing through a pipeline between the outdoor heat exchanger 23 and the receiver 25, and may include an electronic expansion valve, an opening value of which is variable, so as to adjust an amount of the refrigerant.

The first expansion device 24 includes a first sub-expansion device 24A connected to the first part 23A of the outdoor heat exchanger 23 in series, and a second sub-expansion device 24B connected to the second part 23B of the outdoor heat exchanger 23 in series.

The receiver 25 is provided between the outdoor heat exchanger 23 and the heat exchanger units 3 and 4, and temporarily stores the refrigerant introduced into the outdoor heat exchanger 23 or the heat exchanger units 3 and 4. The receiver 25 contains non-condensable gas as well as the refrigerant.

The accumulator 26 supplies the refrigerant only in a gaseous state, filtered out from the refrigerant in gaseous and liquid states introduced from the first and second four-way valves 21 and 22, to the compressor 10. Here, the accumulator 26 supplies oil contained therein together with the refrigerant in the gaseous state to the compressor 10.

One side of the accumulator 26 is connected to the first and second four-way valves 21 and 22, and the other side of the accumulator 26 is connected to the inlet side 11 of the compressor 10.

The heat exchanger units 3 and 4 are installed at the outside of the outdoor unit 2 of the heat pump apparatus 1. The heat exchanger units 3 and 4 serve as evaporators to evaporate the refrigerant in a low-temperature and low-pressure liquid state into a gaseous state when the heat exchanger units 3 and 4 perform cooling operations, and serve as condensers to condense the refrigerant in a high-temperature and high-pressure gaseous state into a normal-temperature and high-pressure liquid state when the heat exchanger units 3 and 4 perform heating operations.

The heat exchanger units 3 and 4 include the first heat exchanger unit 3 provided between the receiver 25 and the first four-way valve 21, and the second heat exchanger unit 4 provided between the receiver 25 and the second heat exchanger unit 4. The first heat exchanger unit 3 and the second heat exchanger unit 4 are arranged in parallel, and are respectively connected to the receiver 25 and the first and second four-way valves 21 and 22.

The first heat exchanger unit 3 includes a first sub-heat exchanger unit 3A and a second sub-heat exchanger unit 3B arranged in parallel between the receiver 25 and the first four-way valve 21.

Each of the first sub-heat exchanger unit 3A and the second sub-heat exchanger unit 3B may include at least one of an indoor air heat exchanger which exchanges heat between a refrigerant and indoor air, and a water-refrigerant heat exchanger which exchanges heat between a refrigerant and water.

That is, both the first sub-heat exchanger unit 3A and the second sub-heat exchanger unit 3B of the first heat exchanger unit 3 may include indoor air heat exchangers or water-refrigerant heat exchangers, or the first sub-heat exchanger unit 3A may include an indoor air heat exchanger and the second sub-heat exchanger unit 3B may include a water-refrigerant heat exchanger.

Here, if both the first sub-heat exchanger unit 3A and the second sub-heat exchanger unit 3B include indoor air heat exchangers, the first sub-heat exchanger unit 3A and the second sub-heat exchanger unit 3B serve as indoor units of the air conditioner, which cool and heat indoor air, and if both the first sub-heat exchanger unit 3A and the second sub-heat exchanger unit 3B include water-refrigerant heat exchangers, the first sub-heat exchanger unit 3A and the second sub-heat exchanger unit 3B serve as hydro units, which transfer water, having exchanged heat with a refrigerant, to a radiator, a convector, and a fan coil unit to emit heat to the atmosphere.

Although this embodiment illustrates that the first heat exchanger unit 3 includes two sub-heat exchanger units, i.e., the first sub-heat exchanger unit 3A and the second sub-heat exchanger unit 3B, the first heat exchanger unit 3 may include three or more sub-heat exchanger units.

The second heat exchanger unit 4 may include at least one of a water-refrigerant heat exchanger which exchanges heat between a refrigerant and water, and a heat exchanger for hot water supply with a heating coil (or a spiral heat exchanger) to heat water in a storage tank.

Here, if the second heat exchanger unit 4 includes a water-refrigerant heat exchanger, the second heat exchanger unit 4 serves as a hydro unit, which transfers water, having exchanged heat with a refrigerant, to a radiator, a convector, and a fan coil unit to emit heat to the atmosphere, and if the second heat exchanger unit 4 includes a heat exchanger for hot water supply, the second heat exchanger unit 4 serves as a hot water supply unit, which stores hot water in a storage tank and then supplies the stored hot water to a user to bathe or wash his/her face.

The second expansion device 27 is provided between the receiver 25 and the first heat exchanger unit 3, and the third expansion device 28 is provided between the receiver 25 and the second heat exchanger unit 4.

The second expansion device 27 is a kind of variable expansion device, which expands or intercepts the refrigerant passing through a pipeline between the first heat exchanger unit 3 and the receiver 25, and may include an electronic expansion valve, an opening value of which is variable, so as to adjust an amount of the refrigerant.

The second expansion device 27 includes a third sub-expansion device 27A connected to the first sub-heat exchanger unit 3A in series, and a fourth sub-expansion device 27B connected to the second sub-heat exchanger unit 3B in series.

The third expansion device 28 is a kind of variable expansion device, which expands or intercepts the refrigerant passing through a pipeline between the second heat exchanger unit 4 and the receiver 25.

Although this embodiment illustrates that the outdoor unit 2 of the heat pump apparatus 1 includes the second and third expansion devices 27 and 28, the second and third expansion devices 27 and 28 may be installed at the outside of the outdoor unit 2 of the heat pump apparatus 1 adjacent to the first and second heat exchanger units 3 and 4.

The heat pump apparatus 1 in accordance with this embodiment further includes a control device 5.

When a signal from a remote controller or a sensor is input to the control device 5, the control device 5 controls operations of the compressor 10, the first to third expansion devices 24, 27, and 28, the first four-way valve 21, and the second four-way valve 22 based on the input signal. Plural operations of the heat pump apparatus 1 may be performed by operating the respective four-way valves 21 and 22 under the control of the control device 5.

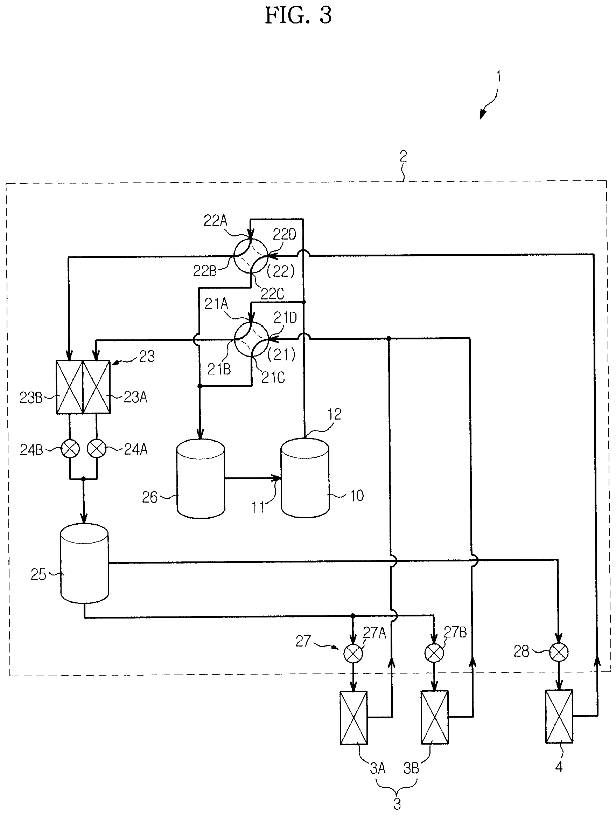

Hereinafter, operations of the heat pump apparatus by the control device will be described with reference to FIGS. 3 to 5.

First, with reference to FIG. 3, cooling operations of the first heat exchanger unit and the second heat exchanger unit of the heat pump apparatus will be described. FIG. 3 is a circuit diagram illustrating a flow of the refrigerant when the first and second heat exchanger units of the heat pump apparatus perform cooling operations.

As shown in FIG. 3, when the cooling operations of the first and second heat exchanger units 3 and 4 are performed, the first port 21A and the second port 21B of the first four-way valve 21 are connected and the third port 21C and the fourth port 21D of the first four-way valve 21 are connected, and the first port 22A and the second port 22B of the second four-way valve 22 are connected and the third port 22C and the fourth port 22D of the second four-way valve 22 are connected, by the control device 5.

Thereby, the refrigerant, as shown by arrows in FIG. 3, flows from the compressor 10 sequentially to the first four-way valve 21 and the second four-way valve 22, the outdoor heat exchanger 23, the first expansion device 24, the receiver 25, the second expansion device 27 and the third expansion device 28, the first heat exchanger unit 3 and the second heat exchanger unit 4, the first four-way valve 21 and the second four-way valve 22, the accumulator 26, and the compressor 10.

Particularly, the refrigerant is branched from the compressor 10 into the first port 21A of the first four-way valve 21 and the first port 22A of the second four-way valve 22. Then, the refrigerant having been introduced into the first port 21A of the first four-way valve 21 flows to the first part 23A of the outdoor heat exchanger 23 via the second port 21B of the first four-way valve 21, and the refrigerant introduced into the first port 22A of the second four-way valve 22 flows to the second part 23B of the outdoor heat exchanger 23 via the second port 22B of the second four-way valve 22.

Thereafter, the refrigerant having passed through the first part 23A of the outdoor heat exchanger 23 flows to the receiver 25 through the first sub-expansion device 24A, and the refrigerant having passed through the second part 23B of the outdoor heat exchanger 23 flows to the receiver 25 through the second sub-expansion device 24B.

Further, the refrigerant having been introduced into the receiver 25 is branched into the first heat exchanger unit 3 and the second heat exchanger unit 4, passes through the first four-way valve 21 and the second four-way valve 22, and then flows from the accumulator 26 to the inlet side 11 of the compressor 10.

That is, the refrigerant having passed through the receiver 25 flows to the first sub-heat exchanger unit 3A via the third sub-expansion device 27A and then flows to the first four-way valve 21, flows to the second sub-heat exchanger unit 3B via the fourth sub-expansion device 27B and then flows to the first four-way valve 21, and flows to the second heat exchanger unit 4 via the third expansion device 28 and then flows to the second four-way valve 22.

Here, the refrigerant is compressed in the compressor 10, the compressed refrigerant emits heat and thus is condensed while passing through the first part 23A and the second part 23B of the outdoor heat exchanger 23, the condensed refrigerant is expanded while passing through the first and second sub-expansion devices 24A and 24B of the first expansion device 24, the expanded refrigerant is temporarily stored in the receiver 25 and then is expanded again while passing through the second and third expansion devices 27 and 28, and the refrigerant absorbs heat while passing through the first sub-heat exchanger unit 3A the second sub-heat exchanger unit 3B of the first heat exchanger unit 3 and the second heat exchanger unit 4.

Therefore, cooling operations of the first sub-heat exchanger unit 3A the second sub-heat exchanger unit 3B of the first heat exchanger unit 3 and the second heat exchanger unit 4 to absorb surrounding heat may be performed.

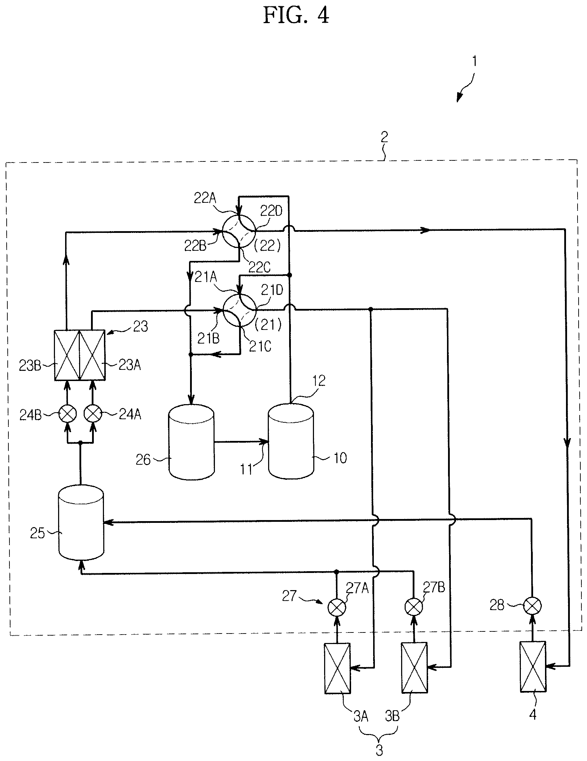

Next, with reference to FIG. 4, heating operations of the first heat exchanger unit and the second heat exchanger unit of the heat pump apparatus will be described. FIG. 4 is a circuit diagram illustrating a flow of the refrigerant when the first and second heat exchanger units of the heat pump apparatus perform heating operations.

As shown in FIG. 4, when the cooling operations of the first and second heat exchanger units 3 and 4 are performed, the first port 21A and the fourth port 21D of the first four-way valve 21 are connected and the second port 21B and the third port 21C of the first four-way valve 21 are connected, and the first port 22A and the fourth port 22D of the second four-way valve 22 are connected and the second port 22B and the third port 22C of the second four-way valve 22 are connected, by the control device 5.

Thereby, the refrigerant, as shown by arrows in FIG. 4, flows from the compressor 10 sequentially to the first four-way valve 21 and the second four-way valve 22, the first heat exchanger unit 3 and the second heat exchanger unit 4, the second expansion device 27 and the third expansion device 28, the receiver 25, the first expansion device 24, the outdoor heat exchanger 23, the first four-way valve 21 and the second four-way valve 22, the accumulator 26, and the compressor 10.

Particularly, the refrigerant is branched from the compressor 10 into the first port 21A of the first four-way valve 21 and the first port 22A of the second four-way valve 22. Then, the refrigerant having been introduced into the first port 21A of the first four-way valve 21 flows to the first sub-heat exchanger unit 3A and the second sub-heat exchanger unit 3B of the first heat exchanger unit 3 via the fourth port 21D of the first four-way valve 21, and the refrigerant introduced into the first port 22A of the second four-way valve 22 flows to the heat exchanger unit 4 via the fourth port 22D of the second four-way valve 22.

Thereafter, the refrigerant having passed through the first sub-heat exchanger unit 3A flows to the receiver 25 through the third sub-expansion device 27A, the refrigerant having passed through the second sub-heat exchanger unit 3B flows to the receiver 25 through the fourth sub-expansion device 27B, and the refrigerant having passed through the second heat exchanger unit 4 flows to the receiver 25 through the third expansion device 28.

Further, the refrigerant having been introduced into the receiver 25 is branched into the first sub-expansion device 24A and the first part 23A of the outdoor heat exchanger 23, and the second sub-expansion device 24B and the second part 23B of the outdoor heat exchanger 23, and then passes through the accumulator 26 via the second and third ports 21B and 21C of the first four-way valve 21 and the second and third ports 22B and 22C of the second four-way valve 22 and flows to the inlet side 11 of the compressor 10.

Here, the refrigerant is compressed in the compressor 10, the compressed refrigerant emits heat and thus is condensed while passing through the first sub-heat exchanger unit 3A and the second sub-heat exchanger unit 3B of the first heat exchanger unit 3 and the second heat exchanger unit 4, the condensed refrigerant is expanded while passing through the third and fourth sub-expansion devices 27A and 27B of the second expansion device 27 and the third expansion device 28, the expanded refrigerant is temporarily stored in the receiver 25 and then is expanded again while passing through the first and second sub-expansion devices 24A and 24B of the first expansion device 24, and the refrigerant absorbs heat while passing through the first part 23A and the second part 23B of the outdoor heat exchanger 23.

Therefore, heating operations of the first sub-heat exchanger unit 3A the second sub-heat exchanger unit 3B of the first heat exchanger unit 3 and the second heat exchanger unit 4 to emit heat to the surroundings may be performed.

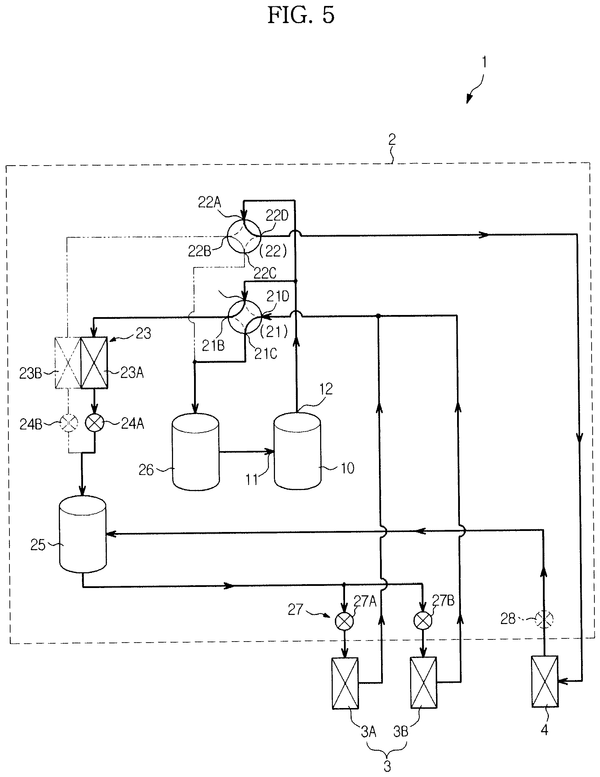

Next, with reference to FIG. 5, cooling and heating operations of the first heat exchanger unit and the second heat exchanger unit of the heat pump apparatus will be described. FIG. 5 is a circuit diagram illustrating a flow of the refrigerant when the first and second heat exchanger units of the heat pump apparatus perform cooling and heating operations.

As shown in FIG. 5, when the cooling and heating operations of the first and second heat exchanger units 3 and 4 are performed, the first port 21A and the second port 21B of the first four-way valve 21 are connected and the third port 21C and the fourth port 21D of the first four-way valve 21 are connected, and the first port 22A and the fourth port 22D of the second four-way valve 22 are connected, by the control device 5.

Thereby, the refrigerant, as shown by arrows in FIG. 5, flows from the compressor 10 sequentially to the first four-way valve 21 and the second four-way valve 22, the outdoor heat exchanger 23, the first expansion device 24, the receiver 25, the second expansion device 27 and the third expansion device 28, the first heat exchanger unit 3 and the second heat exchanger unit 4, the first four-way valve 21, the accumulator 26, and the compressor 10.

Particularly, the refrigerant is branched from the compressor 10 into the first port 21A of the first four-way valve 21 and the first port 22A of the second four-way valve 22. Then, the refrigerant having been introduced into the first port 21A of the first four-way valve 21 flows to the first part 23A of the outdoor heat exchanger 23 via the second port 21B of the first four-way valve 21, and the refrigerant introduced into the first port 22A of the second four-way valve 22 flows to the second heat exchanger unit 4 via the fourth port 22D of the second four-way valve 22.

Thereafter, the refrigerant having passed through the first part 23A of the outdoor heat exchanger 23 flows to the receiver 25 through the first sub-expansion device 24A, and the refrigerant having passed through the second heat exchanger unit 4 flows to the receiver 25 through the third expansion device 28.

Further, the refrigerant having been introduced into the receiver 25 is branched into the first sub-heat exchanger unit 3A and the second sub-heat exchanger unit 3B of the first heat exchanger unit 3, and then passes through the first four-way valve 21 and flows from the accumulator 26 to the inlet side 11 of the compressor 10.

Here, the refrigerant is compressed in the compressor 10, the compressed refrigerant emits heat and thus is condensed while passing through the first part 23A of the outdoor heat exchanger 23 and the second heat exchanger unit 4, the condensed refrigerant is expanded while passing through the first sub-expansion device 24A of the first expansion device and the third expansion device 28, the expanded refrigerant is temporarily stored in the receiver 25 and then is expanded again while passing through the third and fourth sub-expansion devices 27A and 27B of the second expansion device 27, and the refrigerant absorbs heat while passing through the first sub-heat exchanger unit 3A and the second sub-heat exchanger unit 3B of the first heat exchanger unit 3.

Therefore, cooling operations of the first sub-heat exchanger unit 3A and the second sub-heat exchanger unit 3B of the first heat exchanger unit 3 to absorb surrounding heat may be performed, and a heating operation of the second heat exchanger unit 4 to emit heat to the surroundings may be performed. Here, a part of heat emitted from the second heat exchanger unit 4 is heat absorbed by the first sub-heat exchanger unit 3A and the second sub-heat exchanger unit 3B, and thus a heat recovery system may be formed.

Although a few embodiments of the present invention have been shown and described, it would be appreciated by those skilled in the art that changes may be made in these embodiments without departing from the invention, the scope of which is defined in the claims.

## Claims

1. A heat pump apparatus (1) comprising a compressor (10), four-way valves (21, 22), an outdoor heat exchanger (23), a first expansion device (24), a receiver (25), a second expansion device (27), a third expansion device (28), heat exchanger units (3, 4), and an accumulator (26), which are sequentially connected in series by refrigerant pipes, wherein:
the outdoor heat exchanger (23) includes a first part (23A) and a second part (23B) divided from each other;
the four-way valves (21, 22) include a first four-way valve (21) connected to the first part (23A) of the outdoor heat exchanger (23), and a second four-way valve (22) arranged in parallel with the first four-way valve (21) and connected to the second part (23B) of the outdoor heat exchanger (23);
the heat exchanger units (3, 4) include a first heat exchanger unit (3) connected to the first four-way valve (21), and a second heat exchanger unit (4) connected to the second four-way valve (22);
the first four-way valve (21) includes a first port (21A) connected to an outlet side (12) of the compressor (10), a second port (21B) connected to the first part (23A) of the outdoor heat exchanger (23), a third port (21C) connected to the accumulator (26), and a fourth port (21D) connected to the first heat exchanger unit (3);
the second four-way valve (22) includes a first port (22A) connected to the outlet side (12) of the compressor (10), a second port (22B) connected to the second part (23B) of the outdoor heat exchanger (23), a third port (22C) connected to the accumulator (26), and a fourth port (22D) connected to the second heat exchanger unit (4);
the heat pump apparatus (1) further comprises a control device (5) to control the first and second four-way valves (21, 22); and
when the first port (21A) and the second port (21B) of the first four-way valve (21) are connected and the third port (21C) and the fourth port (21D) of the first four-way valve (21) are connected and the first port (22A) and the fourth port (22D) of the second four-way valve (22) are connected by the control device (5), the refrigerant sequentially flows to the compressor (10), the first and second four-way valves (21, 22), the first part (23A) of the outdoor heat exchanger (23) and the second heat exchanger unit (4), the first and third expansion devices (24, 28), the receiver (25), the second expansion device (27), the first heat exchanger unit (3), the first four-way valve (21), the accumulator (26), and the compressor (10).

2. The heat pump apparatus according to claim 1, wherein, when the first port (21A, 22A) and the second port (21B, 22B) of each of the first and second four-way valves (21, 22) are connected and the third port (21C, 22C) and the fourth port (21D, 22D) of each of the first and second four-way valves (21, 22) are connected by the control device (5), the refrigerant sequentially flows to the compressor (10), the first and second four-way valves (21, 22), the outdoor heat exchanger (23), the first expansion device (24), the receiver (25), the second and third expansion devices (27, 28), the first and second heat exchanger units (3, 4), the first and second four-way valves (21, 22), the accumulator (26), and the compressor (10).

3. The heat pump apparatus according to claim 1, wherein, when the first port (21A, 22A) and the fourth port (21D, 22D) of each of the first and second four-way valves (21, 22) are connected and the second port (21B, 22B) and the third port (21C, 22C) of each of the first and second four-way valves (21, 22) are connected by the control device (5), the refrigerant sequentially flows to the compressor (10), the first and second four-way valves (21, 22), the first and second heat exchanger units (3, 4), the second and third expansion devices (27, 28), the receiver (25), the first expansion device (24), the outdoor heat exchanger (23), the first and second four-way valves (21, 22), the accumulator (26), and the compressor (10).

4. The heat pump apparatus according to claim 1, wherein the first heat exchanger unit (3) includes a first sub-heat exchanger (3A) unit and a second sub-heat exchanger unit (3B) arranged in parallel and connected to the second expansion device (27) and the fourth port (21D) of the first four-way valve (21).

5. The heat pump apparatus according to claim 1, wherein the first expansion device (24) includes a first sub-expansion device (24A) provided between the first part (23A) of the outdoor heat exchanger (23) and the receiver (25), and a second sub-expansion device (24B) provided between the second part (23B) of the outdoor heat exchanger (23) and the receiver (25).

6. The heat pump apparatus according to claim 4, wherein:
the second expansion device (27) includes a third sub-expansion device (27A) provided between the first sub-heat exchanger unit (3A) and the receiver (25), and a fourth sub-expansion device (27B) provided between the second sub-heat exchanger unit (3B) and the receiver (25); and
the third expansion device (28) is provided between the second heat exchanger unit (4) and the receiver (25).

7. The heat pump apparatus according to any one of the preceding claims, wherein the first heat exchanger unit (3) includes at least one of an indoor air heat exchanger which exchanges heat between a refrigerant and indoor air to cool and heat an indoor space, and a water-refrigerant heat exchanger which exchanges heat between the refrigerant and water to cool and heat the indoor space.

8. The heat pump apparatus according to any one of the preceding claims, wherein the second heat exchanger unit (4) includes at least one of a water-refrigerant heat exchanger which exchanges heat between a refrigerant and water to cool and heat an indoor space, and a heat exchanger for hot water supply to heat water in a storage tank.

## Patentansprüche

1. Wärmepumpenvorrichtung (1) mit einem Kompressor (10), Vier-Wege-Ventilen (21, 22), einem Außen-Wärmetauscher (23), einer ersten Expansionseinrichtung (24), einem Empfänger (25), einer zweiten Expansionseinrichtung (27), einer dritten Expansionseinrichtung (28), Wärmetauschereinheiten (3, 4) und einem Akkumulator (26), die sequentiell in Reihe durch Kühlmittelleitungen verbunden sind, wobei:
der Außen-Wärmetauscher (23) ein erstes Teil (23A) und ein zweites Teil (23B) aufweist, die voneinander getrennt sind;
die Vier-Wege-Ventile (21, 22) ein erstes Vier-Wege-Ventil (21), das mit dem ersten Teil (23A) des Außen-Wärmetauschers (23) verbunden ist, und ein zweites Vier-Wege-Ventil (22) aufweist, das parallel zu dem ersten Vier-Wege-Ventil (21) angeordnet und mit dem zweiten Teil (23B) des Außen-Wärmetauschers (23) verbunden ist;
die Wärmetauschereinheiten (3, 4) eine erste Wärmetauschereinheit (3), die mit dem ersten Vier-Wege-Ventil (21) verbunden ist, und eine zweite Wärmetauschereinheit (4) aufweisen, die mit dem zweiten Vier-Wege-Ventil (22) verbunden ist;
das erste Vier-Wege-Ventil (21) einen ersten Anschluss (21A), der mit der Auslassseite (12) des Kompressors (10) verbunden ist, einen zweiten Anschluss (21B), der mit dem ersten Teil (23A) des Außen-Wärmetauschers (23) verbunden ist, einen dritten Anschluss (21C), der mit dem Akkumulator (26) verbunden ist, und einen vierten Anschluss (21D) aufweist, der mit der ersten Wärmetauschereinheit (3) verbunden ist;
das zweite Vier-Wege-Ventil (22) einen ersten Anschluss (22A), der mit der Auslassseite (12) des Kompressors (10) verbunden ist, einen zweiten Anschluss (22B), der mit dem zweiten Teil (23B) des Außen-Wärmetauschers (23) verbunden ist, einen dritten Anschluss (22C), der mit dem Akkumulator (26) verbunden ist, und einen vierten Anschluss (22D) aufweist, der mit der zweiten Wärmetauschereinheit (4) verbunden ist;
die Wärmepumpenvorrichtung (1) ferner eine Steuereinrichtung (5) zur Steuerung des ersten und des zweiten Vier-Wege-Ventils (21, 22) aufweist; und
wenn durch die Steuereinrichtung (5) der erste Anschluss (21A) und der zweite Anschluss (21B) des ersten Vier-Wege-Ventils (21) verbunden sind und der dritte Anschluss (21C) und der vierte Anschluss (21D)des ersten Vier-Wege-Ventils (21) verbunden sind und der erste Anschluss (22A) und der vierte Anschluss (22D) des zweiten Vier-Wege-Ventils (22) verbunden sind, das Kühlmittel der Reihe nach durch den Kompressor (10), das erste und das zweite Vier-Wege-Ventil (21, 22), den ersten Teil (23A) des Außen-Wärmetauschers (23) und die zweite Wärmetauschereinheit (4), die erste und die zweite Expansionseinrichtung (24, 28), den Empfänger (25), die zweite Expansionseinrichtung (27), die erste Wärmetauschereinheit (3), das erste Vier-Wege-Ventil (21), den Akkumulator (26) und zu dem Kompressor (10) strömt.

2. Wärmepumpenvorrichtung nach Anspruch 1, wobei, wenn durch die Steuereinrichtung (5) der erste Anschluss (21A, 22A) und der zweite Anschluss (21B, 22B) jeweils des ersten und des zweiten Vier-Wege-Ventils (21, 22) verbunden sind und der dritte Anschluss (21C, 22C) und der vierte Anschluss (21D, 22D) jeweils des ersten und des zweiten Vier-Wege-Ventils (21, 22) verbunden sind, das Kühlmittel der Reihe nach zu dem Kompressor (10), dem ersten und dem zweiten Vier-Wege-Ventil (21, 22), dem Außen-Wärmetauscher (23), der ersten Expansionseinrichtung (25), dem Empfänger (25), der zweiten und der dritten Expansionseinrichtung (27, 28), der ersten und der zweiten Wärmetauschereinheit (3, 4), dem ersten und dem zweiten Vier-Wege-Ventil (21, 22), dem Akkumulator (26) und dem Kompressor (10) strömt.

3. Wärmepumpenvorrichtung nach Anspruch 1, wobei, wenn durch die Steuereinrichtung (5) der erste Anschluss (21A, 22A) und der vierte Anschluss (21D, 22D) jeweils des ersten und des zweiten Vier-Wege-Ventils (21, 22) verbunden sind und der zweite Anschluss (21B, 22B) und der dritte Anschluss (21C, 22C) jeweils des ersten und des zweiten Vier-Wege-Ventils (21, 22) verbunden sind, das Kühlmittel der Reihe nach zu dem Kompressor (10), dem ersten und dem zweiten Vier-Wege-Ventil (21, 22), der ersten und der zweiten Wärmetauschereinheit (3, 4), der zweiten und der dritten Expansionseinrichtung (27, 28), dem Empfänger (25), der ersten Expansionseinrichtung (24), dem Außen-Wärmetauscher (23), dem ersten und dem zweiten Vier-Wege-Ventil (21, 22), dem Akkumulator (26) und dem Kompressor (10) strömt.

4. Wärmepumpenvorrichtung nach Anspruch 1, wobei die erste Wärmetauschereinheit (3) eine erste Teil-Wärmetauscher-(3A)Einheit und eine zweite Teil-Wärmetauschereinheit (3B) aufweist, die parallel angeordnet und mit der zweiten Expansionseinrichtung (27) und dem vierten Anschluss (21D) des ersten Vier-Wege-Ventils (21) verbunden sind.

5. Wärmepumpenvorrichtung nach Anspruch 1, wobei die erste Expansionseinrichtung (24) eine erste Teil-Expansionseinrichtung (24A), die zwischen dem ersten Teil (23A) des Außen-Wärmetauschers (23) und dem Empfänger (25) vorgesehen ist, und eine zweite Teil-Expansionseinrichtung (24B) aufweist, die zwischen dem zweiten Teil (23B) des Außen-Wärmetauschers (23) und dem Empfänger (25) vorgesehen ist.

6. Wärmepumpenvorrichtung nach Anspruch 4, wobei:
die zweite Expansionseinrichtung (27) eine dritte Teil-Expansionseinrichtung (27A), die zwischen der ersten Teil-Wärmetauschereinheit (3A) und dem Empfänger (25) vorgesehen ist, und eine vierte Teil-Expansionseinrichtung (27B) aufweist, die zwischen der zweiten Teil-Wärmetauschereinheit (3B) und dem Empfänger (25) vorgesehen ist; und
die dritte Expansionseinrichtung (28) zwischen der zweiten Wärmetauschereinheit (4) und dem Empfänger (25) vorgesehen ist.

7. Wärmepumpenvorrichtung nach einem der vorhergehenden Ansprüche, wobei die erste Wärmetauschereinheit (3) einen Innenluft-Wärmetauscher, der Wärme zwischen einem Kühlmittel und einer Innenluft zum Kühlen und Erwärmen eines Innenraums austauscht, und/oder einen Wasser-Kühlmittel-Wärmetauscher aufweist, der Wärme zwischen dem Kühlmittel und Wasser zum Kühlen und Erwärmen des Innenraums austauscht.

8. Wärmepumpenvorrichtung nach einem der vorhergehenden Ansprüche, wobei die zweite Wärmetauschereinheit (4) einen Wasser-Kühlmittel-Wärmetauscher, der Wärme zwischen einem Kühlmittel und Wasser zum Kühlen und Erwärmen eines Innenraums austauscht, und/oder einen Wärmetauscher für eine Heißwasserversorgung zum Aufheizen von Wasser in einem Vorratsbehälter aufweist.

## Revendications

1. Appareil à pompe à chaleur (1) comprenant un compresseur (10), des vannes à quatre voies (21, 22) un échangeur de chaleur extérieur (23), un premier dispositif d'expansion (24), un récepteur (25), un deuxième dispositif d'expansion (27), un troisième dispositif d'expansion (28), des unités d'échangeur de chaleur (3, 4) et un accumulateur (26) qui sont reliés en série par des tuyaux réfrigérants, dans lequel :
l'échangeur de chaleur extérieur (23) inclut un premier composant (23A) et un second composant (23B) séparés l'un de l'autre,
les vannes à quatre voies (21, 22) incluent une première vanne à quatre voies (21) reliée au premier composant (23A) de l'échangeur de chaleur extérieur (23) et une seconde vanne à quatre voies (22) disposée en parallèle avec la première vanne à quatre voies (21) et reliée au second composant (23B) de l'échangeur de chaleur extérieur (23),
les unités d'échangeur de chaleur (3, 4) incluent une première unité d'échangeur de chaleur (3) reliée à la première vanne à quatre voies (21) et une seconde unité d'échangeur de chaleur (4) reliée à la seconde vanne à quatre voies (22),
la première vanne à quatre voies (21) inclut un premier orifice (21A) relié à un orifice de sortie (12) du compresseur (10), un deuxième orifice (21B) relié au premier composant (23A) de l'échangeur de chaleur extérieur (23), un troisième orifice (21C) relié à l'accumulateur (26) et un quatrième orifice (21D) relié à la première unité d'échangeur de chaleur (3),
la seconde vanne à quatre voies (22) inclut un premier orifice (22A) relié à l'orifice de sortie (12) du compresseur (10), un deuxième orifice (22B) relié au second composant (23B) de l'échangeur de chaleur extérieur (23), un troisième orifice (22C) relié à l'accumulateur (26) et un quatrième orifice (22D) relié à la seconde unité d'échangeur de chaleur (4),
l'appareil à pompe à chaleur (1) comprend en outre un dispositif de commande (5) pour commander les première et seconde vannes à quatre voies (21, 22), et
lorsque le premier orifice (21A) et le deuxième orifice (21B) de la première vanne à quatre voies (21) sont reliés et que le troisième orifice (21C) et la quatrième orifice (21D) de la première vanne à quatre voies (21) sont reliés, et que le premier orifice (22A) et le quatrième orifice (22D) de la seconde vanne à quatre voies (22) sont reliés par le dispositif de commande (5), le réfrigérant circule séquentiellement vers le compresseur (10), les première et seconde vannes à quatre voies (21, 22), le premier composant (23A) de l'échangeur de chaleur extérieur (23) et de la seconde unité d'échangeur de chaleur (4), les premier et troisième dispositifs d'expansion (24, 28), le récepteur (25), le deuxième dispositif d'expansion (27), la première unité d'échangeur de chaleur (3), la première vanne à quatre voies (21), l'accumulateur (26) et le compresseur (10).

2. Appareil à pompe à chaleur selon la revendication 1, dans lequel, lorsque le premier orifice (21A, 22A) et le deuxième orifice (21B, 22B) de chacune des première et seconde vannes à quatre voies (21, 22) sont reliés et que le troisième orifice (21C, 22C) et le quatrième orifice (21D, 22D) de chacune des première et seconde vannes à quatre voies (21, 22) sont reliés par le dispositif de commande (5), le réfrigérant circule séquentiellement vers le compresseur (10), les première et seconde vannes à quatre voies (21, 22), l'échangeur de chaleur extérieur (23), le premier dispositif d'expansion (24), le récepteur (25), les deuxième et troisième dispositifs d'expansion (27, 28), les première et seconde unités d'échangeur de chaleur (3, 4), les première et seconde vannes à quatre voies (21, 22), l'accumulateur (26) et le compresseur (10).

3. Appareil à pompe à chaleur selon la revendication 1, dans lequel, lorsque le premier orifice (21A, 22A) et le quatrième orifice (21D, 22D) de chacune des première et seconde vannes à quatre voies (21, 22) sont reliés et que le deuxième orifice (21B, 22B) et le troisième orifice (21C, 22C) de chacune des première et seconde vannes à quatre voies (21, 22) sont reliés par le dispositif de commande (5), le réfrigérant circule séquentiellement vers le compresseur (10), les première et seconde vannes à quatre voies (21, 22), les première et seconde unités d'échangeur de chaleur (3, 4), les deuxième et troisième dispositifs d'expansion (27, 28), le récepteur (25), le premier dispositif d'expansion (24), l'échangeur de chaleur extérieur (23), les première et seconde vannes à quatre voies (21, 22), l'accumulateur (26) et le compresseur (10).

4. Appareil à pompe à chaleur selon la revendication 1, dans lequel la première unité d'échangeur de chaleur (3) inclut une première sous unité d'échangeur de chaleur (3A) et une seconde sous unité d'échangeur de chaleur (3B) disposées en parallèle et reliées au deuxième dispositif d'expansion (27) et au quatrième orifice (21D) de la première vanne à quatre voies (21).

5. Appareil à pompe à chaleur selon la revendication 1, dans lequel le premier dispositif d'expansion (24) inclut un premier sous dispositif d'expansion (24A) disposé entre le premier composant (23A) de l'échangeur de chaleur extérieur (23) et le récepteur (25), ainsi qu'un deuxième sous dispositif d'expansion (24B) disposé entre le second composant (23B) de l'échangeur de chaleur extérieur (23) et le récepteur (25).

6. Appareil à pompe à chaleur selon la revendication 4, dans lequel :
le deuxième dispositif d'expansion (27) inclut un troisième sous dispositif d'expansion (27A) disposé entre la première sous unité d'échangeur de chaleur (3A) et le récepteur (25), ainsi qu'un quatrième sous dispositif d'expansion (27B) disposé entre la seconde sous unité d'échangeur de chaleur (3B) et le récepteur (25), et
le troisième dispositif d'expansion (28) est disposé entre la seconde unité d'échangeur de chaleur (4) et le récepteur (25).

7. Appareil à pompe à chaleur selon l'une quelconque des revendications précédentes, dans lequel la première unité d'échangeur de chaleur (3) inclut au moins l'un d'un échangeur de chaleur d'air intérieur qui échange de la chaleur entre un réfrigérant et l'air intérieur dans le but de réfrigérer et chauffer un espace intérieur, et d'un échangeur de chaleur eau - réfrigérant qui échange de la chaleur entre le réfrigérant et de l'eau dans le but de refroidir et chauffer l'espace intérieur.

8. Appareil à pompe à chaleur selon l'une quelconque des revendications précédentes, dans lequel la seconde unité d'échangeur de chaleur (4) inclut au moins l'un d'un échangeur de chaleur eau - réfrigérant qui échange de la chaleur entre un réfrigérant et de l'eau dans le but de refroidir et chauffer un espace intérieur, et d'un échangeur de chaleur de fourniture d'eau chaude destiné à chauffer de l'eau dans un réservoir de stockage.
